# EUROPEAN PATENT APPLICATION

(11) **EP 4 318 226 A1**
(43) Date of publication of application: **07.02.2024**
(21) Application number: 23182982.1
(22) Date of filing: 03.07.2023
(51) Int. Cl.: G06F 9/30

(54) **INSTRUCTIONS TO CONVERT FROM FP8**

(30) Priority: 03.08.2022 IN 202241044383; 01.10.2022 US 202217958382
(71) Applicant: Intel Corporation, Santa Clara, CA 95054 (US)
(72) Inventor: Heinecke, Alexander, San Jose, 95134 (US); Adelman, Menachem, 7179034 Modi'in (IL); Georganas, Evangelos, San Jose, 95129 (US); Gradstein, Amit, 3052316 Binyamina (IL); Hughes, Christopher, Santa Clara, 95051 (US); Mellempudi, Naveen, 560035 Bangalore (IN); Rubanovich, Simon, 34792 Haifa (IL); Sherman, Uri, 25213 Bustan Hagalil (IL); Sperber, Zeev, 3092832 Zikhron Yaakov (IL)
(74) Representative: Goddar, Heinz J.

(57) **Abstract**

Techniques for converting FP8 data elements to FP16 or FP32 data elements using a single instruction are described. An example apparatus includes decoder circuitry to decode a single instruction, the single instruction to indicate that execution circuitry is to convert packed FP8 data from the identified source to packed half-precision floating-point data or single-precision floating point data and store the packed half-precision floating-point data or single-precision floating point data into corresponding data element positions of the identified destination operand.

## Description

### BACKGROUND

State of the art AI uses different 32-bit and 16-bit floating point formats such as, for example, Brain floating point 16 (also known as, for example, bfloat16 or BF16), Institute of Electrical and Electronics Engineers (IEEE) half-precision floating point (also known as, for example, FP16 or float16) and single-precision floating point (also known as, for example, FP32 or float32).

### BRIEF DESCRIPTION OF DRAWINGS

Various embodiments in accordance with the present disclosure will be described with reference to the drawings, in which:
FIG. 1 illustrates different floating point representation formats.
FIG. 2 illustrates examples of execution of a VCVTBF82PH / VCVTHF82PH / VCVTXBF82PH / VCVTXHF82PH instruction.
FIG. 3 illustrates an example execution of a VCVTNE2PH2BF8 / VCVTNE2PH2HF8 / VCVTNE2PS2BF8 / VCVTNE2PS2HF8 instruction.
FIG. 4 illustrates embodiments of hardware to process an instruction such as a FP8 to FP16 or FP32 conversion instruction.
FIG. 5 illustrates embodiment of method performed to process a VCVTBF82PH / VCVTHF82PH / VCVTBF82PS / VCVTHF82PS / VCVTXBF82PH / VCVTXHF82PH / VCVTXBF82PS / VCVTXHF82PS instruction.
FIGS. 6-9 illustrate examples of pseudocode for performing the VCVT[X]BF82PH, VCVT[X]HF82PH, VCVT[X]BF82PS, and VCVT[X]HF82PS instructions.
FIG. 10 illustrates an example computing system.
FIG. 11 illustrates a block diagram of an example processor and/or System on a Chip (SoC) that may have one or more cores and an integrated memory controller.
FIG. 12(A) is a block diagram illustrating both an example in-order pipeline and an example register renaming, out-of-order issue/execution pipeline according to examples.
FIG. 12(B) is a block diagram illustrating both an example in-order architecture core and an example register renaming, out-of-order issue/execution architecture core to be included in a processor according to examples.
FIG. 13 illustrates examples of execution unit(s) circuitry.
FIG. 14 is a block diagram of a register architecture according to some examples.
FIG. 15 illustrates examples of an instruction format.
FIG. 16 illustrates examples of an addressing information field.
FIG. 17 illustrates examples of a first prefix.
FIGS. 18(A)-(D) illustrate examples of how the R, X, and B fields of the first prefix in FIG. 17 are used.
FIGS. 19(A)-(B) illustrate examples of a second prefix.
FIG. 20 illustrates examples of a third prefix.
FIG. 21 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for performing a conversion to half-precision floating point or single-precision floating point from 8-bit floating point in response to a single instruction.

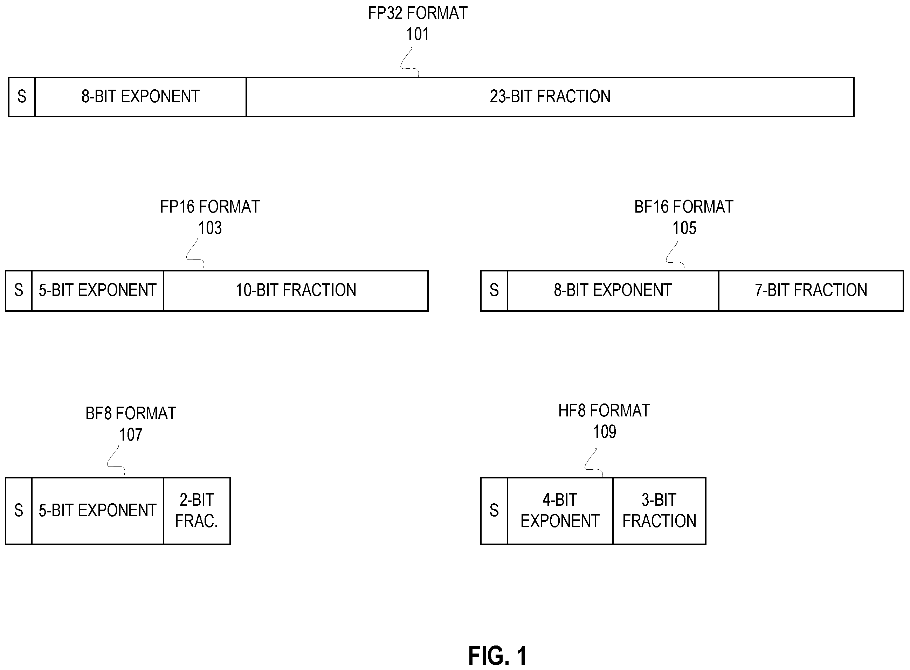

FIG. 1 illustrates different floating point representation formats. In this illustration, the formats are in little endian format, however, in some embodiments, a big endian format is used. The FP32 format 101 has a sign bit (S), an 8-bit exponent, and a 23-bit fraction (a 24-bit mantissa that uses an implicit bit). The FP16 format 103 has a sign bit (S), a 5-bit exponent, and a 10-bit fraction. The BF16 format 105 has a sign bit (S), an 8-bit exponent, and a 7-bit fraction.

In contrast to the IEEE 754-standardized 16-bit (FP16) variant, BF16 does not compromise on range when being compared to FP32. FP32 numbers have 8 bits of exponent and 24 bits of mantissa (including the one implicit). BF16 cuts 16 bits from the 24-bit FP32 mantissa to create a 16-bit floating point datatype. In contrast FP16, roughly halves the FP32 mantissa to 10 explicit bits and reduces the exponent to 5 bits to fit the 16-bit datatype envelope.

Although BF16 offers less precision than FP16, it is typically better suited to support deep learning tasks. FP16's range is not enough to accomplish deep learning training out-of-the-box due to its limited range. BF16 does not suffer from this issue and the limited precision may actually help to generalize the learned weights in the neural net training task. In other words, lower precision can be seen as offering a built-in regularization property.

In some examples, an 8-bit floating point format (FP8) provides some advantages over a larger floating point format. For example, an 8-bit floating point format may reduce pressure on memory and bandwidth used for machine learning (such as weights, activations, and gradient values used for training and/or inference of neural networks). As shown, the IEEE and BF16 formats have a fixed number of bits allocated to the fraction (or mantissa which is the fraction bits + 1 bit) and exponent fields. Additionally, in some examples, a fixed exponent bias may be provided for a FP16 or BF16 number. As eight bits allows for a small number of mantissa and exponent bits than FP16 or BF16 it may be advantageous to have some variance in FP8 formats (e.g., ensure high accuracy and convergence when training machine learning models).

In machine learning, different parameters, namely weights, gradients and activations, have different precision and range requirements to achieve high training accuracy and/or convergence. This allows for different allocations of the number of exponent and fraction (mantissa bits) depending on the parameter being represented.

An example FP8 format is shown in 107. In some examples, this is called a bfloat8-bit floating point (BF8) format. As shown, this format uses 1 bit for a sign, 5 bits for the exponent, and 2 bits for the fraction (or 1 + 2 bits for the mantissa). An example FP8 format is shown in 109. In some examples, this is called a hybrid8-bit floating point (HF8) format. As shown, this format uses 1 bit for a sign, 4 bits for the exponent, and 3 bits for the fraction (or 1 + 3 bits for the mantissa).

Normalized numbers, subnormal (denormal) numbers, and zeroes are supported in both FP8 formats. In some examples, infinity and not-a-number (NaN) encodings are not supported, however, in some examples one or more are. In examples where infinities are not supported, a maximum exponent value is not reserved for encoding NaN and +/infinity and just used to represent normalized floating-point numbers.

In examples where infinities and NaN are supported, the are mapped to 0x80. In some examples, for a NaN on an overflow, the value may be upconverted to IEEE754 NaN. In some examples, infinities and NaN raise exceptions for a hardware status register to delineate NaN from overflow.

In some examples, a zero is represented by an encoding with all zeroes the exponent and the fraction. Encodings with an all zero exponent and non-zero fraction represent denormal numbers. In the HF8 format, an exponent = 0000₂ and mantissa = 000₂ represents numerical value of zero, while exponent = 0000₂ and mantissa = 001₂, 010₂, 011₂, 100₂, 101₂, 110₂, and 111₂ represent the denormal numbers. Similarly, in the BF8 format an exponent = 00000₂ and mantissa = 00₂ represents numerical value of zero, while exponent = 00000₂ and mantissa =01₂, 10₂, and 11₂ represent the denormal numbers.

In some examples, the FP8 formats utilize a variable exponential bias (e.g., a 6-bit unsigned integer value used as a bias). A bias skews the range of representable values more on the smaller numeric values at the expense of larger numerical values. In these examples, a numerical value of a normalized floating point number is (1)^{sign} × 2^{exponent-bias} × 1. mantissa and the numerical value of a denormal floating point number is (1)^{sign} × 2^{exponent-bias} × 0. mantissa. In some examples, the bias is provided by one or more packed data registers (e.g., SIMD or vector) where each data element position of the one or more packed data registers is to provides a bias value for a corresponding data element position of a source and/or destination. In some examples, the bias is provided by one or more general purpose registers where each general purpose register provides a bias to be used for each data element of a particular source and/or destination. Note that in some examples, a single general purpose register is used for a plurality of sources and/or destination. In some examples, the maximum bias is 16 for BF8 and 8 for HF8.

In some examples, not-a-number (NANs) and infinities are defined similarly to other IEEE floating points format, using an all-ones exponents. However, it is also acceptable in some examples to define versions of instructions that support other formats where "negative zero" is used to denote NANs and infinities, and the all-ones exponent is used to encode normal floating point numbers.

In some examples, hardware support for FP8 supports one or more status (condition code) flags: invalid, denormal, overflow, and underflow. An arithmetic operation with a denormal operand will set the denormal exception flag, while an arithmetic operation with any NaN operand or no useful definable result will set the invalid exception flag. An arithmetic operation with a result that that overflows or underflows a destination will set the overflow and underflow exception flags respectively in some examples.

Recent work has also shown that 8-bit float point formats, such as BF8 (using a 1-5-2 format (1-bit sign, 5-bit exponent, and 2-bit fraction or a 1-4-3 format), are a viable option for input data for mixed precision computation such as fused multiply-add (FMA) with BF8 inputs and a FP32 accumulator. To prepare higher-precision outputs to be used as the next operation's inputs, in some embodiments, those outputs need to be converted/rounded to FP8 numbers. Using 8-bit floating-point format instead of single- precision in at least some matrix operations is expected to alleviate memory utilization and bandwidth issues while providing a non-trivial performance upside (e.g., on the order of 2X) even during the compute operation. Additionally, numerical accuracy studies have shown that the precision of the Deep Learning application is not compromised. However, extensive workload studies have shown, that from time to time its required to avoid classic round-to-nearest behavior during these down converts. Instead, a stochastic rounding operation is needed. Examples herein relate to conversion using a provided bias term, including variable in-place, 2^{nd} source merging and/or saturating.

Current experiments show bandwidth issues on the various cache levels and DRAM. So, as matrix compute capabilities speed up significantly (2X), the memory sub-systems capabilities only increase modestly due to reduce memory footprint. However, it has been found important to achieve convergence that FMAs accumulate into single-precision, IEEE float32. That means it may be important down-convert a result to FP8 after the operation completes.

In some examples, BF8-based operations support round to nearest even (RNE) and stochastic rounding. In some examples, HF8-based operations support round to nearest even (RNE) and stochastic rounding. In some examples, hybrid operations using both HF8 and BF8 are supported.

Some CPUs only offer float16 compute and int8/int16 compute stacks. In order to convert a number from BF8/HF8 to IEEE Float 16/IEEE Float 32, especially when having a variable bias, requires a detour via various int8/int8 instructions und results in a (very) slow execution which depends of the flavor of FP8 number being used. This has even a bigger impact as we would pair these slow upconverts in practice with a at least twice as fast BF8 matrix multiplication unit than using IEEE float16/bfloat16. We therefore thrive for speeding up all upconvert variants to IEEE float16 / float 32.

There are no previously proposed instructions for performing a convert from FP8 (BF8/HF8 including variable Bias) to 16-bit / 32-bit IEEE floating point. Therefore, building a conversion infrastructure capable of converting between these data formats is expected to help to balance compute and speed-up execution.

Detailed herein is an instruction family to convert from BF8/HF8 to IEEE float16/float32: VCVTBF82PH / VCVTHF82PH / VCVTBF82PS / VCVTHF82PS / VCVTXBF82PH / VCVTXHF82PH / VCVTXBF82PS / VCVTXHF82PS. It converts a vector or scalar (up to 32x 8bit elements in a 512-bit register when the destination is IEEE float 16 or up to 16x 8-bit elements in a 512-bit register when the destination is IEEE float 32) to IEEE float16 orfloat32 format. The X (bias) variants allow for additional data being specified on a per element basis (through an additional vector register) or per full vector (through a general-purpose register or a status registers): a variable floating point exponent bias of the source FP8 numbers. The versions without X use a default and fix configuration of the exponent bias which is documented and fixed by the hardware and cannot be changed by software. Also fixed by hardware or set through a configuration register can be special NaN/Inf handling which allows for a wider encoding space for HF8/BF8 as the "wasteful" encoding with all exponent bits being 1 can be reused for normal numbers and inf/nan could be mapped to "-1" (or any other special encoding) and some status registers for the tracking the actual issue. I

Hardware-assisted conversion may also afford the opportunity to "hide" the conversion infrastructure from software (SW) and operating system (OS), for example, by performing arithmetic on a converted vector while converting the next vector. The proposed instruction family obviates any need for manual hands-on tuning by the users or administrators. Converting at a vector level is a reasonable extension of the existing architecture.

Execution of embodiments of an instruction is to cause a conversion, using IEEE nearest even rounding, of a plurality of packed FP8 values in a packed data source operand (e.g., a SIMD/packed data/vector register or memory location) having a plurality of FP8 data elements) to a plurality of packed FP16 or FP32 values and store those values in a packed data destination operand (e.g., a SIMD/packed data/vector register or memory location). In some embodiments, the instruction format utilizes a writemask or predicate, which is used to determine which data element positions of the destination are to be updated, zeroed, etc.

As such, a processor or core implementing such an instruction will execute according to the opcode of the first instruction a conversion of each of the elements of the source from FP8 to FP16 or FP32 and store each converted element into a corresponding data element position of the specified destination vector. In some embodiments, the conversion is to include truncation and rounding, as necessary. The remaining data element positions will be zeroed.

In some embodiments, a BF8 to FP16 conversion instruction has a mnemonic of VCVT[X]BF82PH where VCVT indicates a convert, PH indicates packed FP16, 2 indicates "to", and BF8 indicates the 1-5-2 version of FP8. An embodiment of a format for the BF8 to FP16 conversion instruction is VCVT[X]BF82PH {k1} DST, SRC. In some embodiments, VCVT[X]BF82PH is the opcode mnemonic of the instruction. DST indicates the packed data destination operand location and SRC indicates a packed data source operand location. Example operand sizes include, but are not limited to 64-bit, 128-bit, 256-bit, 512-bit, and 1024-bit. Note that in some embodiments, VCVT[X]BF82PH uses different size operands (for example, 512-bit source and 256-bit destination, or 256-bit source and 128-bit destination). The [X] indicates that a bias may be applied. The bias may be dynamic and provided by a second source such as a second register.

In some embodiments, a HF8 to FP16 conversion instruction has a mnemonic of VCVT[X]HF82PH where VCVT indicates a convert, PH indicates packed FP16, 2 indicates "to", and HF8 indicates the 1-4-3 version of HF8. An embodiment of a format for the HF8 to FP16 conversion instruction is VCVT[X]HF82PH {k1} DST, SRC. In some embodiments, VCVT[X]HF82PH is the opcode mnemonic of the instruction. DST indicates the packed data destination operand location and SRC indicates a packed data source operand location. Example operand sizes include, but are not limited to 64-bit, 128-bit, 256-bit, 512-bit, and 1024-bit. Note that in some embodiments, VCVT[X]HF82PH uses different size operands (for example, 512-bit source and 256-bit destination, or 256-bit source and 128-bit destination). The [X] indicates that a bias may be applied. The bias may be dynamic and provided by a second source such as a second register.

In some embodiments, a BF8 to FP32 conversion instruction has a mnemonic of VCVT[X]BF82PS where VCVT indicates a convert, PS indicates packed FP32, 2 indicates "to", and BF8 indicates the 1-5-2 version of BF8. An embodiment of a format for the BF8 to FP32 conversion instruction is VCVT[X]BF82PS {k1} DST, SRC. In some embodiments, VCVT[X]BF82PS is the opcode mnemonic of the instruction. DST indicates the packed data destination operand location and SRC indicates a packed data source operand location. Example operand sizes include, but are not limited to 64-bit, 128-bit, 256-bit, 512-bit, and 1024-bit. Note that in some embodiments, VCVT[X]BF82PS uses different size operands (for example, 512-bit source and 256-bit destination, or 256-bit source and 128-bit destination). The [X] indicates that a bias may be applied. The bias may be dynamic and provided by a second source such as a second register.

In some embodiments, a HF8 to FP32 conversion instruction has a mnemonic of VCVT[X]HF82PS where VCVT indicates a convert, PS indicates packed FP32, 2 indicates "to", and HF8 indicates the 1-4-3 version of HF8. An embodiment of a format for the HF8 to FP32 conversion instruction is VCVT[X]HF82PS {k1} DST, SRC. In some embodiments, VCVT[X]HF82PS is the opcode mnemonic of the instruction. DST indicates the packed data destination operand location and SRC indicates a packed data source operand location. Example operand sizes include, but are not limited to 64-bit, 128-bit, 256-bit, 512-bit, and 1024-bit. Note that in some embodiments, VCVT[X]BF82PS uses different size operands (for example, 512-bit source and 256-bit destination, or 256-bit source and 128-bit destination). The [X] indicates that a bias may be applied. The bias may be dynamic and provided by a second source such as a second register.

In some embodiments, k1 indicates the use of writemasking/predication. One or more of the operands may be a memory location. In some embodiments, the destination is encoded using one or more fields for ModRM:reg(w) and the source is encoded using one or more fields for ModRM:r/m(r). In some embodiments, the instruction uses prefix 1501(C). In some examples, the destination (DST) is a field for the destination operand identifier, such as packed data register or memory. The source (SRC) is one or more fields for the source operands identifier, such as a packed data register and/or memory. In some examples, the opcode is provided by at least field 1503, DST field is provided by at least field 1644, the source is provided by at least bits VVVV of one of 1905, BPJ17, or 2017, or the source is provided by at least 1646. In some examples, the opcode is provided by at least field 1503, DST field is provided by at least field 1644, the source is provided by bits VVVV of one of 1905, BPJ17, or 2017, or the source is a memory location provided by at least 1646 and/or the SIB byte 1604. In some examples, a bias is provided by register or memory location (such as provided by at least 1646 and/or the SIB byte 1604).

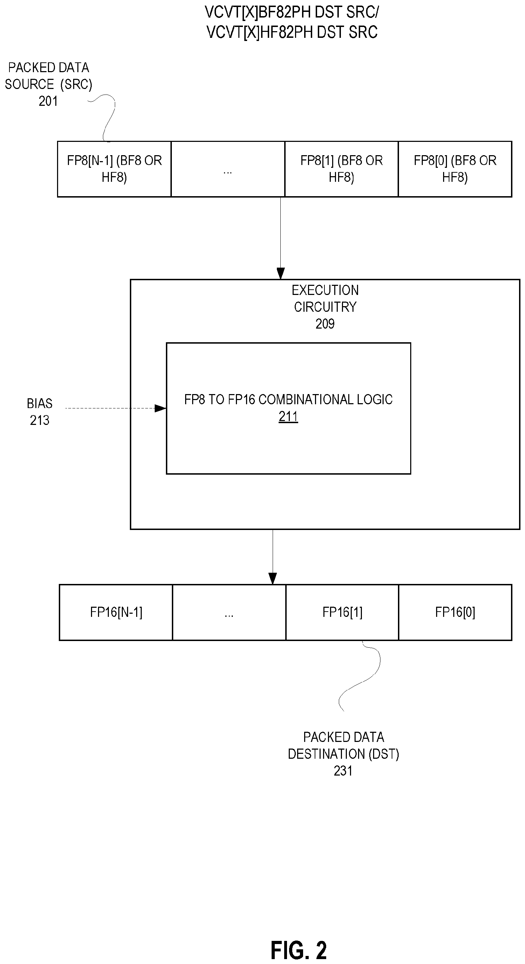

FIG. 2 illustrates examples of execution of a VCVTBF82PH / VCVTHF82PH / VCVTXBF82PH / VCVTXHF82PH instruction. While this illustration is in little endian format, the principles discussed herein work in big endian format. In this example, writemasking/predication is not used.

As shown, a packed data source 201 includes N FP8 (BF8 or HF8) packed data elements. Depending upon the implementation, packed data source 1 201 is a packed data register (e.g., a XMM, YMM, ZMM, vector, SIMD, etc. register), or a memory location.

The packed data source 201 is fed into execution circuitry 209 to be operated on. In particular, execution circuitry 209 performs the FP8 to FP16 conversion using FP8 to FP16 combinational logic 211. Details of embodiments of operations of that combinational logic 211 are described as flow diagrams later. In some examples, the conversion utilizes a supplied bias 213. As noted above, this bias may be provided via a register or other storage location.

Packed data destination 231 stores the results of the conversions of the FP8 data elements of packed data source 201 in corresponding positions of the packed data destination 231. For example, packed data source position 0 (far right) is stored in packed data destination position 0 (far right). While N packed data element conversions are to be stored in the packed data destination 231, remaining elements of the packed data destination 231 are zeroed in some examples.

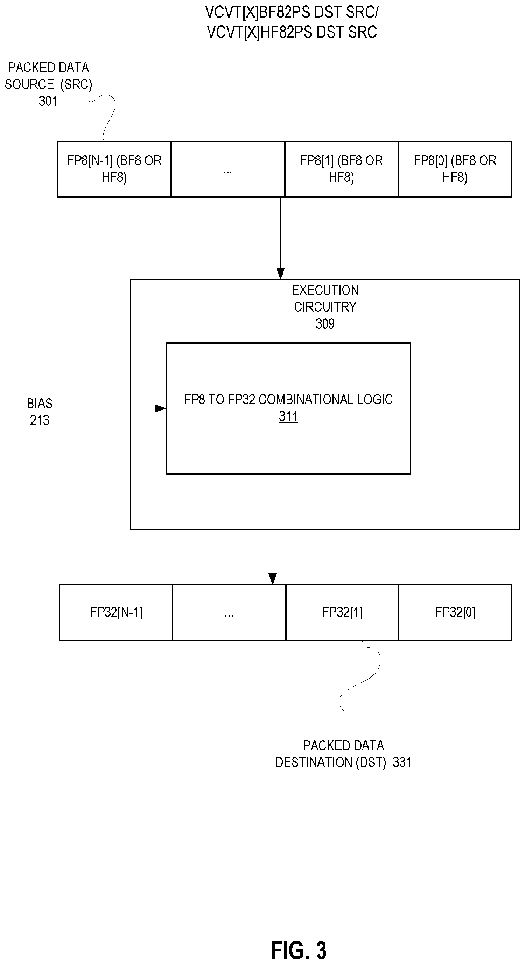

FIG. 3 illustrates an example execution of a VCVTBF82PS/VCVTHF82PS / VCVTXBF82PS / VCVTXHF82PS instruction. While this illustration is in little endian format, the principles discussed herein work in big endian format. In this example, writemasking/predication is not used.

As shown, a packed data source 301 includes N FP8 (BF8 or HF8) packed data elements. Depending upon the implementation, packed data source 1301 is a packed data register (e.g., a XMM, YMM, ZMM, vector, SIMD, etc. register), or a memory location.

The packed data source 301 is fed into execution circuitry 309 to be operated on. In particular, execution circuitry 309 performs the FP8 to FP32 conversion using FP8 to FP32 combinational logic 311. Details of embodiments of operations of that combinational logic 311 are described as flow diagrams later. In some examples, the conversion utilizes a supplied bias 313. As noted above, this bias may be provided via a register or other storage location.

Packed data destination 331 stores the results of the conversions of the FP8 data elements of packed data source 301 in corresponding positions of the packed data destination 331. For example, packed data source position 0 (far right) is stored in packed data destination position 0 (far right). While N packed data element conversions are to be stored in the packed data destination 331, remaining elements of the packed data destination 331 are zeroed in some examples.

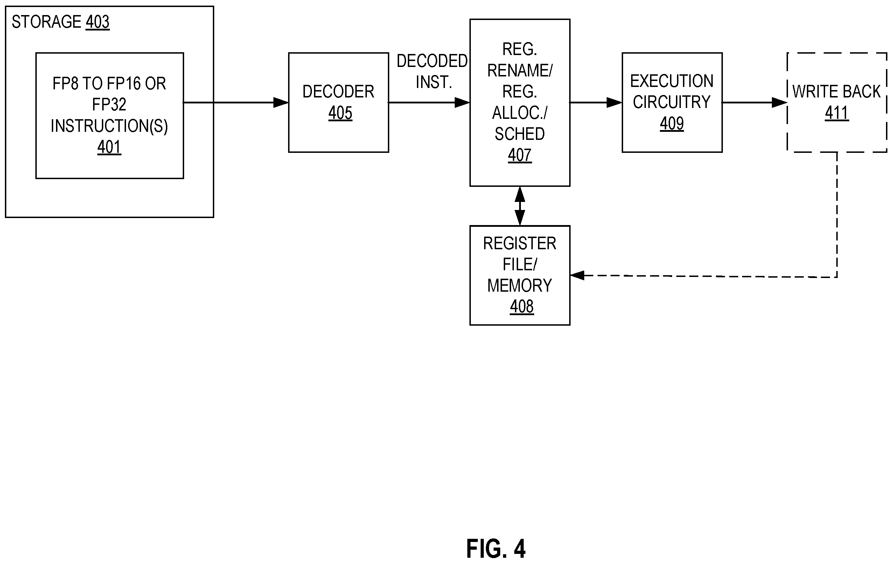

FIG. 4 illustrates embodiments of hardware to process an instruction such as a FP8 to FP16 or FP32 conversion instruction detailed above. As illustrated, storage 403 stores a FP8 to FP16 or FP32 instruction 301 to be executed.

The instruction 401 is received by decode circuitry 405. For example, the decode circuitry 405 receives this instruction from fetch logic/circuitry. The instruction includes fields for an opcode, one or more sources, and a destination. In some embodiments, the one or more sources and destination are registers, and in other embodiments one or more are memory locations.

More detailed embodiments of at least one instruction format will be detailed later. The decode circuitry 305 decodes the instruction into one or more operations. In some embodiments, this decoding includes generating a plurality of micro-operations to be performed by execution circuitry (such as execution circuitry 409). The decode circuitry 405 also decodes instruction prefixes. In some embodiments, the decode circuitry 405 translates between instruction sets and then decodes the translated instruction(s).

In some embodiments, register renaming, register allocation, and/or scheduling circuitry 407 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 408 store data as operands of the instruction to be operated on by execution circuitry 409. Example register types include packed data registers, general purpose registers, and floating-point registers.

Execution circuitry 409 executes the decoded instruction. Example detailed execution circuitry is shown in FIGS. 2, 3, etc. The execution of the decoded instruction causes the execution circuitry to convert packed FP8 data elements to packed FP16 or FP32elements. Depending on the instruction, there is a single source of FP8 data elements or two sources of FP8 data elements.

In some embodiments, retirement/write back circuitry 411 architecturally commits the destination register into the registers or memory 408 and retires the instruction.

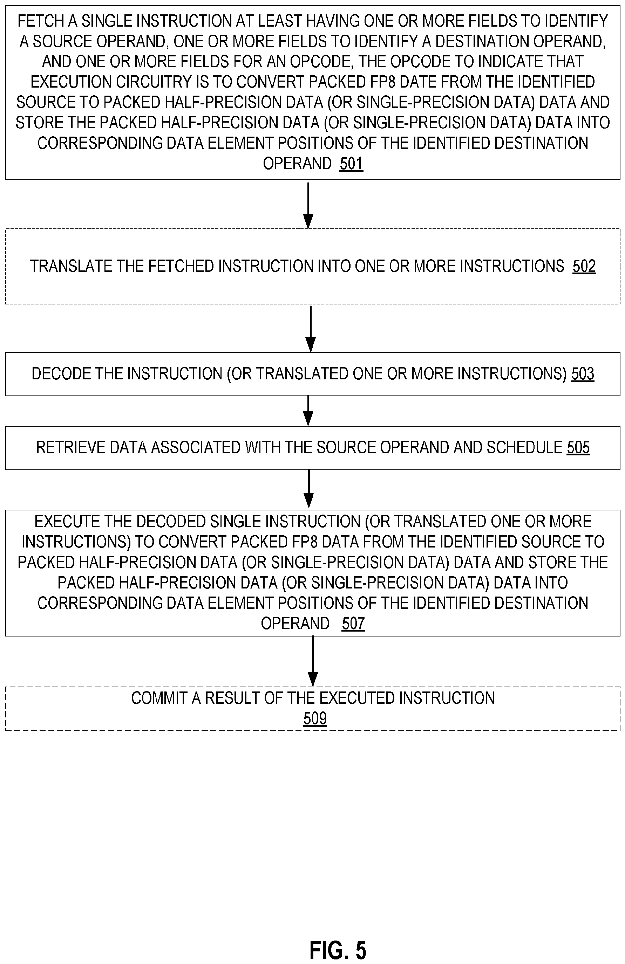

FIG. 5 illustrates embodiment of method performed to process a VCVTBF82PH / VCVTHF82PH / VCVTBF82PS / VCVTHF82PS / VCVTXBF82PH / VCVTXHF82PH / VCVTXBF82PS / VCVTXHF82PS instruction.

At 501, a single VCVTBF82PH / VCVTHF82PH / VCVTBF82PS / VCVTHF82PS / VCVTXBF82PH /VCVTXHF82PH /VCVTXBF82PS/VCVTXHF82PS instruction is fetched. The single VCVTBF82PH / VCVTHF82PH / VCVTBF82PS / VCVTHF82PS / VCVTXBF82PH / VCVTXHF82PH / VCVTXBF82PS / VCVTXHF82PS includes one or more fields to identify a source operand (e.g., using addressing field(s) 1505), one or more fields to identify a destination operand (e.g., addressing field(s) 1505), and one or more fields for an opcode (e.g., opcode 1503), the opcode to indicate that execution circuitry is to convert packed FP8 data from the identified source to packed half-precision floating-point data (or single-precision data) and store the packed half-precision floating-point data (or single-precision data) into corresponding data element positions of the identified destination. In some embodiments, the MOD R/M byte and/or SIB byte provide the operand locations. In some embodiments, the V VCVTBF82PH / VCVTHF82PH / VCVTBF82PS /VCVTHF82PS/ VCVTXBF82PH / VCVTXHF82PH / VCVTXBF82PS / VCVTXHF82PS includes a prefix. In some embodiments, the prefix is prefix 1501(C).

In some embodiments, the fetched instruction is translated into one or more instructions at 502. For example, the fetched instruction is translated into one or more instructions of a different instruction set architecture. Note that this translation may be performed in a hardware translation unit, or using a software translation layer.

The fetched instruction (or translated one or more instructions) is/are decoded at 503. For example, the fetched VCVTBF82PH / VCVTHF82PH / VCVTBF82PS / VCVTHF82PS / VCVTXBF82PH /VCVTXHF82PH /VCVTXBF82PS/VCVTXHF82PS instruction is decoded by decode circuitry such as that detailed herein.

Data values associated with the source operand of the decoded instruction are retrieved at 505. For example, when one or more of the source operands are memory operands, the data from the indicated memory location is retrieved.

At 507, the decoded single instruction is executed, or the translated one or more instructions are executed, by execution circuitry (hardware) such as that detailed herein. For the VCVTBF82PH / VCVTHF82PH / VCVTBF82PS / VCVTHF82PS / VCVTXBF82PH / VCVTXHF82PH / VCVTXBF82PS / VCVTXHF82PS instruction, the execution will cause execution circuitry to convert packed FP8 data from the identified source to packed half-precision floating-point data (or single-precision data) and store the packed half-precision floating-point data (or single-precision data) into corresponding data element positions of the identified destination. In some examples, one or more biases are applied during the conversion(s).

In some embodiments, the instruction is committed or retired at 509.

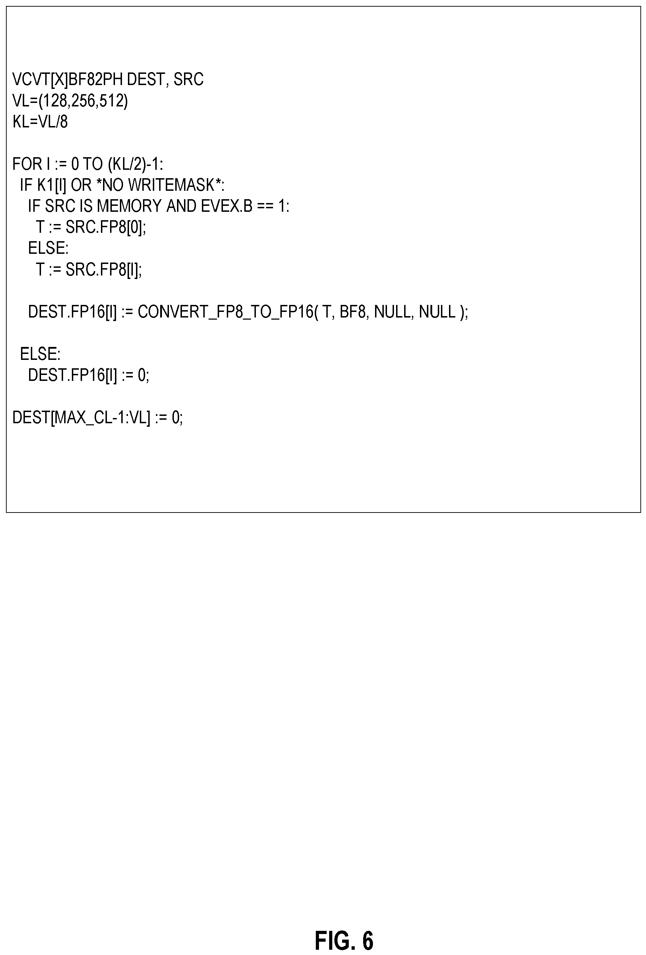

FIGS. 6-9 illustrate examples of pseudocode for performing the VCVT[X]BF82PH, VCVT[X]HF82PH, VCVT[X]BF82PS, and VCVT[X]HF82PS instructions. These examples represent, in pseudocode form, operations of execution circuitry. The execution circuitry comprises combinational circuitry to perform these operations.

As illustrated, there is a helper function defined for the conversion from FP8 to FP16 or FP32. This function takes in a source value, an indication of the FP8 type, an indication of a bias value, and an indication of how NAN are to be treated. Examples of the helper function are as follows:

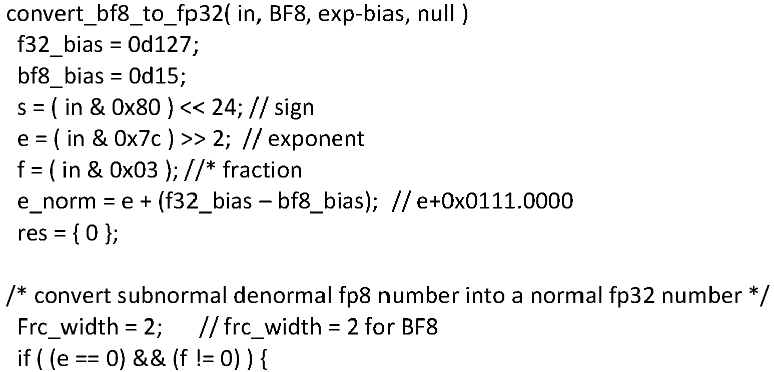

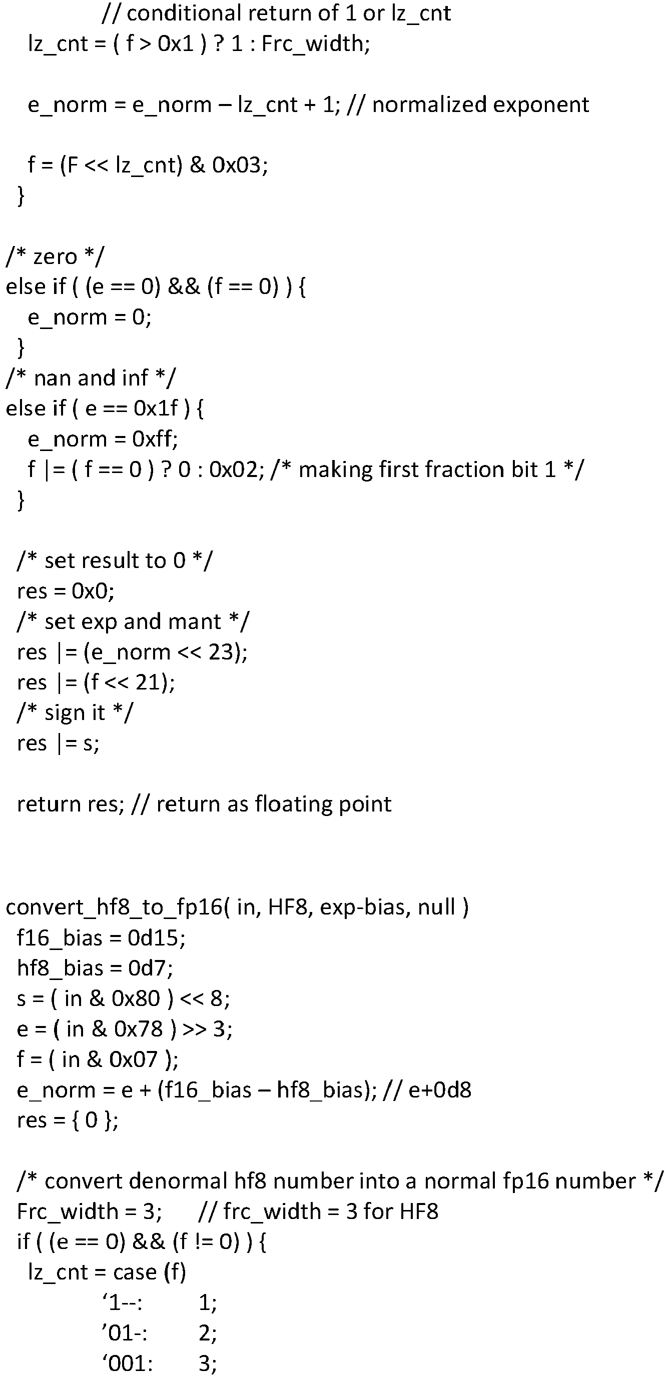

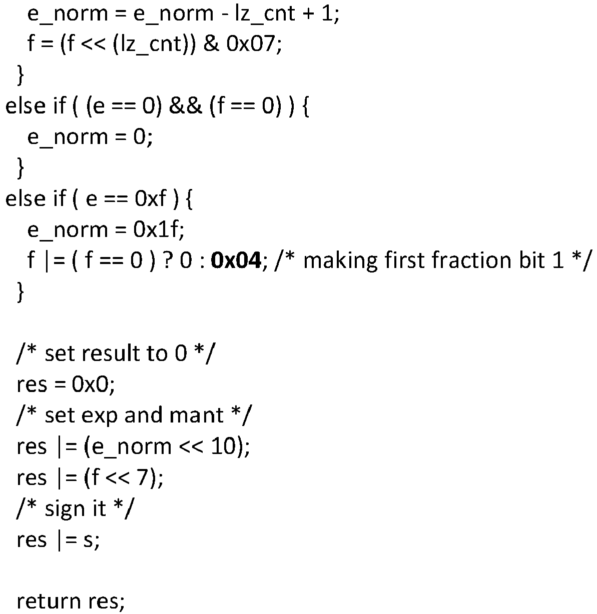

FIG. 6 illustrates examples of pseudocode for performing the VCVT[X]BF82PH instruction.

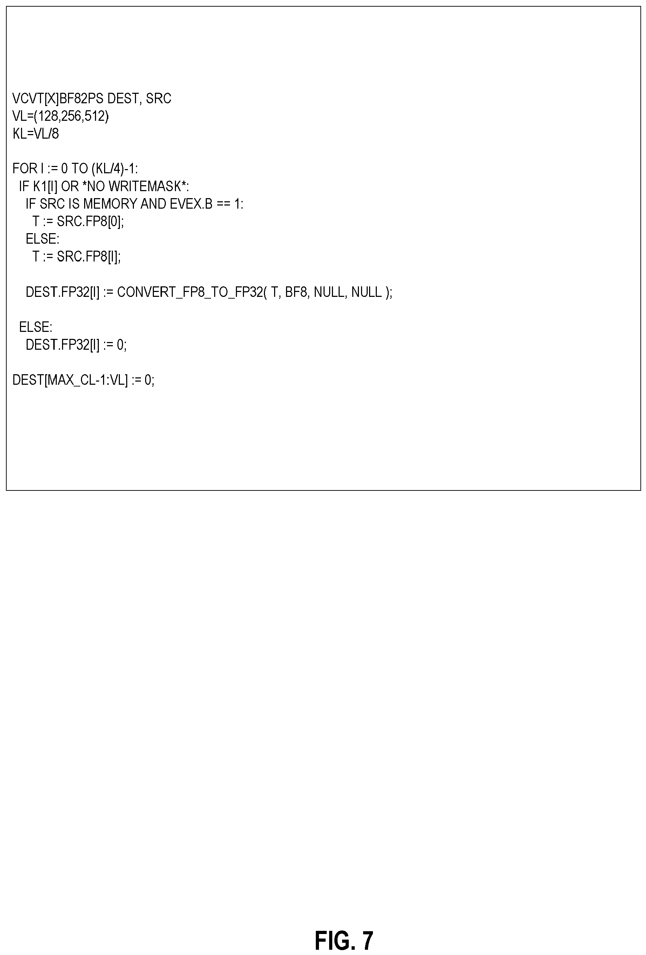

FIG. 7 illustrates examples of pseudocode for performing the VCVT[X]BF82PS instruction.

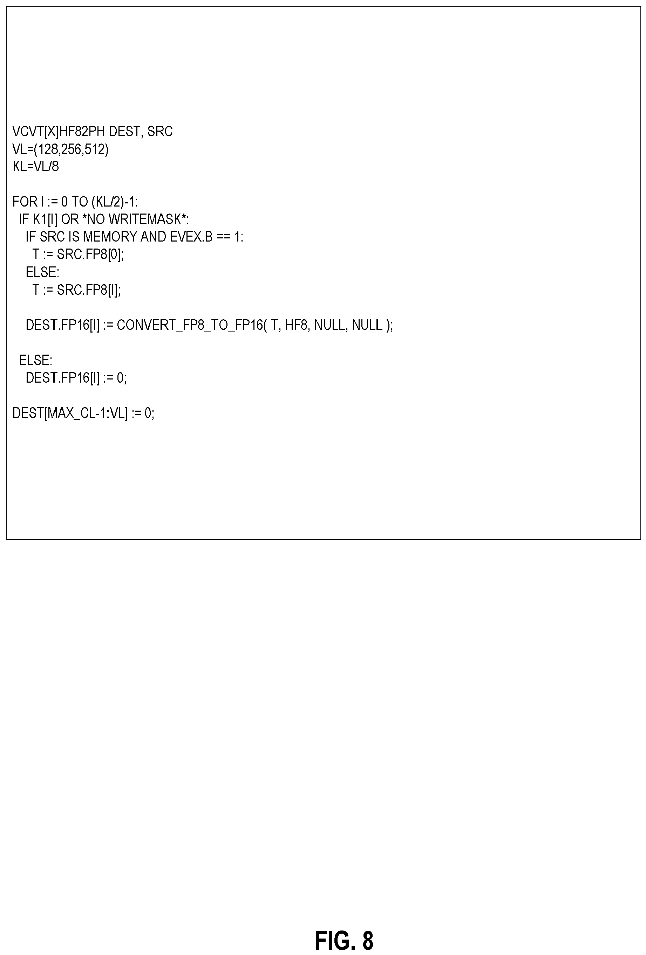

FIG. 8 illustrates examples of pseudocode for performing the VCVT[X]HF82PH instruction.

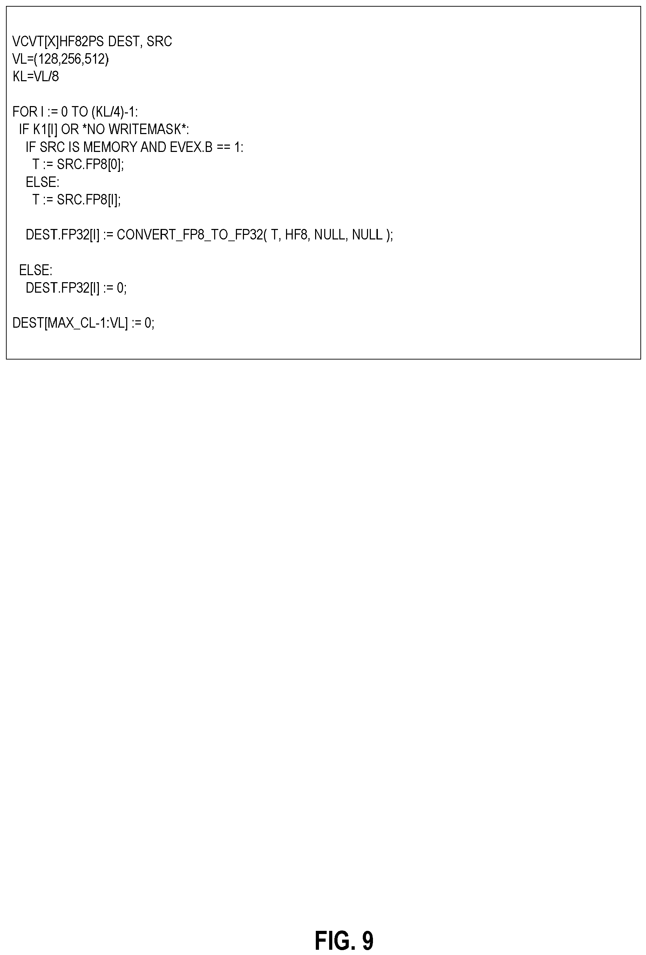

FIG. 9 illustrates examples of pseudocode for performing the VCVT[X]HF82PS instruction.

The instructions detailed above may be used in a variety of computer architectures and environments, utilize one or more instruction formats, etc. Examples of architectures, formats, etc. that support these instructions are detailed below.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

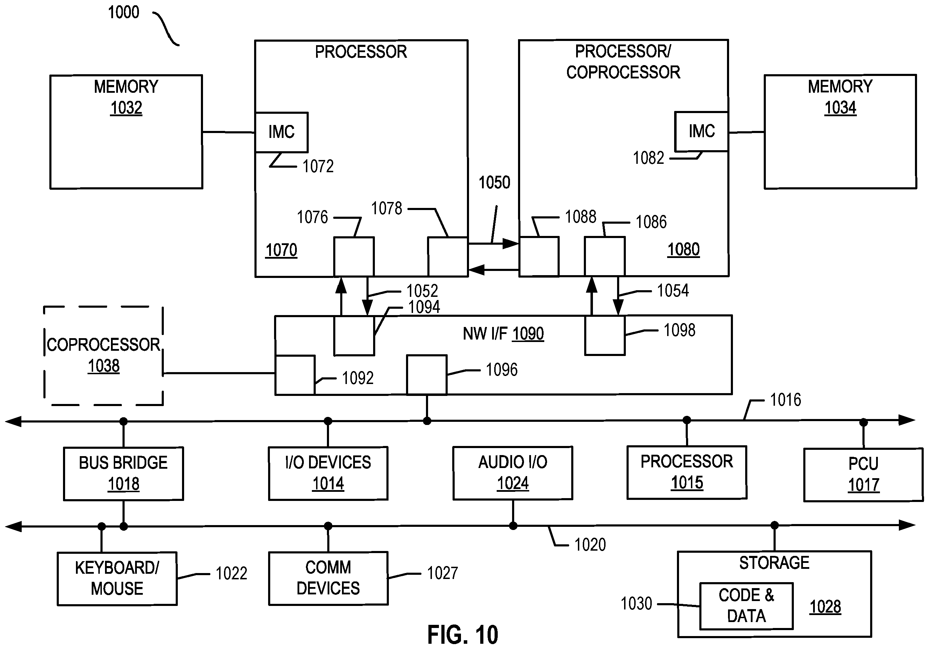

FIG. 10 illustrates an example computing system. Multiprocessor system 1000 is an interfaced system and includes a plurality of processors or cores including a first processor 1070 and a second processor 1080 coupled via an interface 1050 such as a point-to-point (P-P) interconnect, a fabric, and/or bus. In some examples, the first processor 1070 and the second processor 1080 are homogeneous. In some examples, first processor 1070 and the second processor 1080 are heterogenous. Though the example system 1000 is shown to have two processors, the system may have three or more processors, or may be a single processor system. In some examples, the computing system is a system on a chip (SoC).

Processors 1070 and 1080 are shown including integrated memory controller (IMC) circuitry 1072 and 1082, respectively. Processor 1070 also includes interface circuits 1076 and 1078; similarly, second processor 1080 includes interface circuits 1086 and 1088. Processors 1070, 1080 may exchange information via the interface 1050 using interface circuits 1078, 1088. IMCs 1072 and 1082 couple the processors 1070, 1080 to respective memories, namely a memory 1032 and a memory 1034, which may be portions of main memory locally attached to the respective processors.

Processors 1070, 1080 may each exchange information with a network interface (NW I/F) 1090 via individual interfaces 1052, 1054 using interface circuits 1076, 1094, 1086, 1098. The network interface 1090 (e.g., one or more of an interconnect, bus, and/orfabric, and in some examples is a chipset) may optionally exchange information with a coprocessor 1038 via an interface circuit 1092. In some examples, the coprocessor 1038 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1070, 1080 or outside of both processors, yet connected with the processors via an interface such as P-P interconnect, such that either or both processors' local cache information may be stored in the shared cache if a processor is placed into a low power mode.

Network interface 1090 may be coupled to a first interface 1016 via interface circuit 1096. In some examples, first interface 1016 may be an interface such as a Peripheral Component Interconnect (PCI) interconnect, a PCI Express interconnect or another I/O interconnect. In some examples, first interface 1016 is coupled to a power control unit (PCU) 1017, which may include circuitry, software, and/or firmware to perform power management operations with regard to the processors 1070, 1080 and/or co-processor 1038. PCU 1017 provides control information to a voltage regulator (not shown) to cause the voltage regulator to generate the appropriate regulated voltage. PCU 1017 also provides control information to control the operating voltage generated. In various examples, PCU 1017 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1017 is illustrated as being present as logic separate from the processor 1070 and/or processor 1080. In other cases, PCU 1017 may execute on a given one or more of cores (not shown) of processor 1070 or 1080. In some cases, PCU 1017 may be implemented as a microcontroller (dedicated or general-purpose) or other control logic configured to execute its own dedicated power management code, sometimes referred to as P-code. In yet other examples, power management operations to be performed by PCU 1017 may be implemented externally to a processor, such as by way of a separate power management integrated circuit (PMIC) or another component external to the processor. In yet other examples, power management operations to be performed by PCU 1017 may be implemented within BIOS or other system software.

Various I/O devices 1014 may be coupled to first interface 1016, along with a bus bridge 1018 which couples first interface 1016 to a second interface 1020. In some examples, one or more additional processor(s) 1015, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1016. In some examples, second interface 1020 may be a low pin count (LPC) interface. Various devices may be coupled to second interface 1020 including, for example, a keyboard and/or mouse 1022, communication devices 1027 and storage circuitry 1028. Storage circuitry 1028 may be one or more non-transitory machine-readable storage media as described below, such as a disk drive or other mass storage device which may include instructions/code and data 1030 and may implement the storage 503 in some examples. Further, an audio I/O 1024 may be coupled to second interface 1020. Note that other architectures than the point-to-point architecture described above are possible. For example, instead of the point-to-point architecture, a system such as multiprocessor system 1000 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

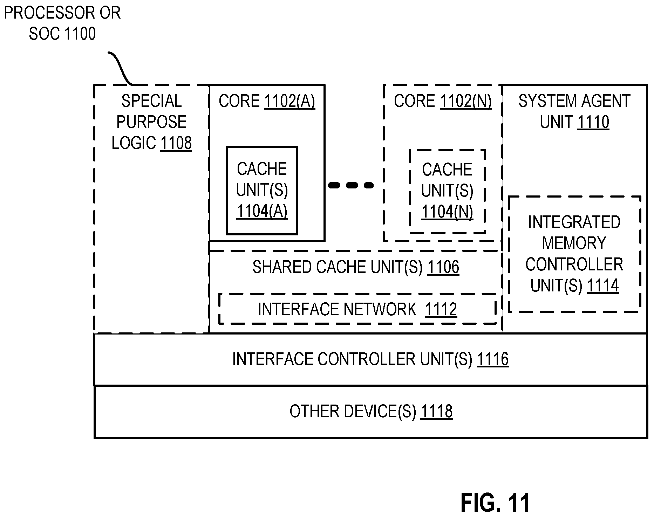

FIG. 11 illustrates a block diagram of an example processor and/or SoC 1100 that may have one or more cores and an integrated memory controller. The solid lined boxes illustrate a processor 1100 with a single core 1102(A), system agent unit circuitry 1110, and a set of one or more interface controller unit(s) circuitry 1116, while the optional addition of the dashed lined boxes illustrates an alternative processor 1100 with multiple cores 1102(A)-(N), a set of one or more integrated memory controller unit(s) circuitry 1114 in the system agent unit circuitry 1110, and special purpose logic 1108, as well as a set of one or more interface controller units circuitry 1116. Note that the processor 1100 may be one of the processors 1070 or 1080, or co-processor 1038 or 1015 of FIG. 10.

Thus, different implementations of the processor 1100 may include: 1) a CPU with the special purpose logic 1108 being integrated graphics and/or scientific (throughput) logic (which may include one or more cores, not shown), and the cores 1102(A)-(N) being one or more general purpose cores (e.g., general purpose in-order cores, general purpose out-of-order cores, or a combination of the two); 2) a coprocessor with the cores 1102(A)-(N) being a large number of special purpose cores intended primarily for graphics and/or scientific (throughput); and 3) a coprocessor with the cores 1102(A)-(N) being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1104(A)-(N) within the cores 1102(A)-(N), a set of one or more shared cache unit(s) circuitry 1106, and external memory (not shown) coupled to the set of integrated memory controller unit(s) circuitry 1114. The set of one or more shared cache unit(s) circuitry 1106 may include one or more mid-level caches, such as level 2 (L2), level 3 (L3), level 4 (L4), or other levels of cache, such as a last level cache (LLC), and/or combinations thereof. While in some examples interface network circuitry 1112 (e.g., a ring interconnect) interfaces the special purpose logic 1108 (e.g., integrated graphics logic), the set of shared cache unit(s) circuitry 1106, and the system agent unit circuitry 1110, alternative examples use any number of well-known techniques for interfacing such units. In some examples, coherency is maintained between one or more of the shared cache unit(s) circuitry 1106 and cores 1102(A)-(N). In some examples, interface controller units circuitry 1116 couple the cores 1102 to one or more other devices 1118 such as one or more I/O devices, storage, one or more communication devices (e.g., wireless networking, wired networking, etc.), etc.

In some examples, one or more of the cores 1102(A)-(N) are capable of multi-threading. The system agent unit circuitry 1110 includes those components coordinating and operating cores 1102(A)-(N). The system agent unit circuitry 1110 may include, for example, power control unit (PCU) circuitry and/or display unit circuitry (not shown). The PCU may be or may include logic and components needed for regulating the power state of the cores 1102(A)-(N) and/or the special purpose logic 1108 (e.g., integrated graphics logic). The display unit circuitry is for driving one or more externally connected displays.

The cores 1102(A)-(N) may be homogenous in terms of instruction set architecture (ISA). Alternatively, the cores 1102(A)-(N) may be heterogeneous in terms of ISA; that is, a subset of the cores 1102(A)-(N) may be capable of executing an ISA, while other cores may be capable of executing only a subset of that ISA or another ISA.

### Example Core Architectures - In-order and out-of-order core block diagram.

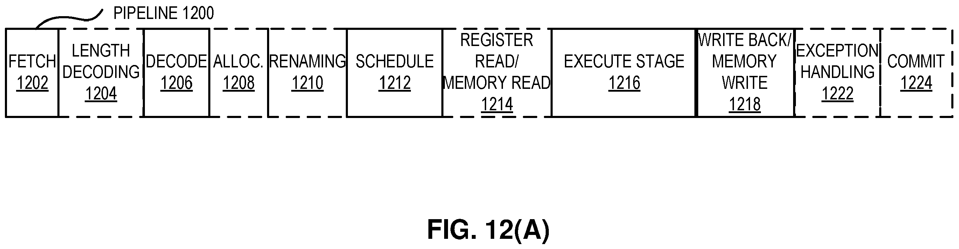

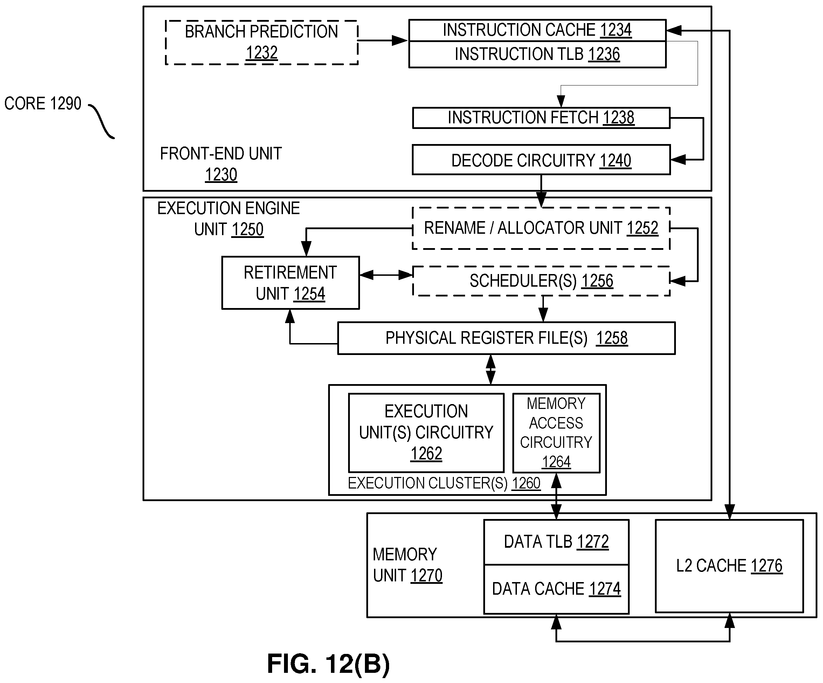

FIG. 12(A) is a block diagram illustrating both an example in-order pipeline and an example register renaming, out-of-order issue/execution pipeline according to examples. FIG. 12(B) is a block diagram illustrating both an example in-order architecture core and an example register renaming, out-of-order issue/execution architecture core to be included in a processor according to examples. The solid lined boxes in FIGS. 12(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 12(A), a processor pipeline 1200 includes a fetch stage 1202, an optional length decoding stage 1204, a decode stage 1206, an optional allocation (Alloc) stage 1208, an optional renaming stage 1210, a schedule (also known as a dispatch or issue) stage 1212, an optional register read/memory read stage 1214, an execute stage 1216, a write back/memory write stage 1218, an optional exception handling stage 1222, and an optional commit stage 1224. One or more operations can be performed in each of these processor pipeline stages. For example, during the fetch stage 1202, one or more instructions are fetched from instruction memory, and during the decode stage 1206, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1206 and the register read/memory read stage 1214 may be combined into one pipeline stage. In one example, during the execute stage 1216, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 12(B) may implement the pipeline 1200 as follows: 1) the instruction fetch circuitry 1238 performs the fetch and length decoding stages 1202 and 1204; 2) the decode circuitry 1240 performs the decode stage 1206; 3) the rename/allocator unit circuitry 1252 performs the allocation stage 1208 and renaming stage 1210; 4) the scheduler(s) circuitry 1256 performs the schedule stage 1212; 5) the physical register file(s) circuitry 1258 and the memory unit circuitry 1270 perform the register read/memory read stage 1214; the execution cluster(s) 1260 perform the execute stage 1216; 6) the memory unit circuitry 1270 and the physical register file(s) circuitry 1258 perform the write back/memory write stage 1218; 7) various circuitry may be involved in the exception handling stage 1222; and 8) the retirement unit circuitry 1254 and the physical register file(s) circuitry 1258 perform the commit stage 1224.

FIG. 12(B) shows a processor core 1290 including front-end unit circuitry 1230 coupled to execution engine unit circuitry 1250, and both are coupled to memory unit circuitry 1270. The core 1290 may be a reduced instruction set architecture computing (RISC) core, a complex instruction set architecture computing (CISC) core, a very long instruction word (VLIW) core, or a hybrid or alternative core type. As yet another option, the core 1290 may be a special-purpose core, such as, for example, a network or communication core, compression engine, coprocessor core, general purpose computing graphics processing unit (GPGPU) core, graphics core, or the like.

The front-end unit circuitry 1230 may include branch prediction circuitry 1232 coupled to instruction cache circuitry 1234, which is coupled to an instruction translation lookaside buffer (TLB) 1236, which is coupled to instruction fetch circuitry 1238, which is coupled to decode circuitry 1240. In one example, the instruction cache circuitry 1234 is included in the memory unit circuitry 1270 rather than the front-end circuitry 1230. The decode circuitry 1240 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1240 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1240 may be implemented using various different mechanisms. Examples of suitable mechanisms include, but are not limited to, look-up tables, hardware implementations, programmable logic arrays (PLAs), microcode read only memories (ROMs), etc. In one example, the core 1290 includes a microcode ROM (not shown) or other medium that stores microcode for certain macroinstructions (e.g., in decode circuitry 1240 or otherwise within the front-end circuitry 1230). In one example, the decode circuitry 1240 includes a micro-operation (micro-op) or operation cache (not shown) to hold/cache decoded operations, micro-tags, or micro-operations generated during the decode or other stages of the processor pipeline 1200. The decode circuitry 1240 may be coupled to rename/allocator unit circuitry 1252 in the execution engine circuitry 1250.

The execution engine circuitry 1250 includes the rename/allocator unit circuitry 1252 coupled to retirement unit circuitry 1254 and a set of one or more scheduler(s) circuitry 1256. The scheduler(s) circuitry 1256 represents any number of different schedulers, including reservations stations, central instruction window, etc. In some examples, the scheduler(s) circuitry 1256 can include arithmetic logic unit (ALU) scheduler/scheduling circuitry, ALU queues, address generation unit (AGU) scheduler/scheduling circuitry, AGU queues, etc. The scheduler(s) circuitry 1256 is coupled to the physical register file(s) circuitry 1258. Each of the physical register file(s) circuitry 1258 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1258 includes vector registers unit circuitry, writemask registers unit circuitry, and scalar register unit circuitry. These register units may provide architectural vector registers, vector mask registers, general-purpose registers, etc. The physical register file(s) circuitry 1258 is coupled to the retirement unit circuitry 1254 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1254 and the physical register file(s) circuitry 1258 are coupled to the execution cluster(s) 1260. The execution cluster(s) 1260 includes a set of one or more execution unit(s) circuitry 1262 and a set of one or more memory access circuitry 1264. The execution unit(s) circuitry 1262 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1256, physical register file(s) circuitry 1258, and execution cluster(s) 1260 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1264). It should also be understood that where separate pipelines are used, one or more of these pipelines may be out-of-order issue/execution and the rest in-order.

In some examples, the execution engine unit circuitry 1250 may perform load store unit (LSU) address/data pipelining to an Advanced Microcontroller Bus (AMB) interface (not shown), and address phase and writeback, data phase load, store, and branches.

The set of memory access circuitry 1264 is coupled to the memory unit circuitry 1270, which includes data TLB circuitry 1272 coupled to data cache circuitry 1274 coupled to level 2 (L2) cache circuitry 1276. In one example, the memory access circuitry 1264 may include load unit circuitry, store address unit circuitry, and store data unit circuitry, each of which is coupled to the data TLB circuitry 1272 in the memory unit circuitry 1270. The instruction cache circuitry 1234 is further coupled to the level 2 (L2) cache circuitry 1276 in the memory unit circuitry 1270. In one example, the instruction cache 1234 and the data cache 1274 are combined into a single instruction and data cache (not shown) in L2 cache circuitry 1276, level 3 (L3) cache circuitry (not shown), and/or main memory. The L2 cache circuitry 1276 is coupled to one or more other levels of cache and eventually to a main memory.

The core 1290 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1290 includes logic to support a packed data instruction set architecture extension (e.g., AVX1, AVX2), thereby allowing the operations used by many multimedia applications to be performed using packed data.

### Example Execution Unit(s) Circuitry.

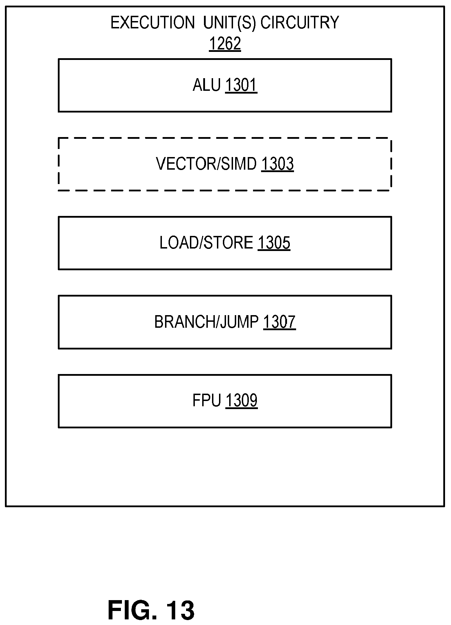

FIG. 13 illustrates examples of execution unit(s) circuitry, such as execution unit(s) circuitry 1262 of FIG. 12(B). As illustrated, execution unit(s) circuity 1262 may include one or more ALU circuits 1301, optional vector/single instruction multiple data (SIMD) circuits 1303, load/store circuits 1305, branch/jump circuits 1307, and/or Floating-point unit (FPU) circuits 1309. ALU circuits 1301 perform integer arithmetic and/or Boolean operations. Vector/SIMD circuits 1303 perform vector/SIMD operations on packed data (such as SIMD/vector registers). Load/store circuits 1305 execute load and store instructions to load data from memory into registers or store from registers to memory. Load/store circuits 1305 may also generate addresses. Branch/jump circuits 1307 cause a branch or jump to a memory address depending on the instruction. FPU circuits 1309 perform floating-point arithmetic. The width of the execution unit(s) circuitry 1262 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

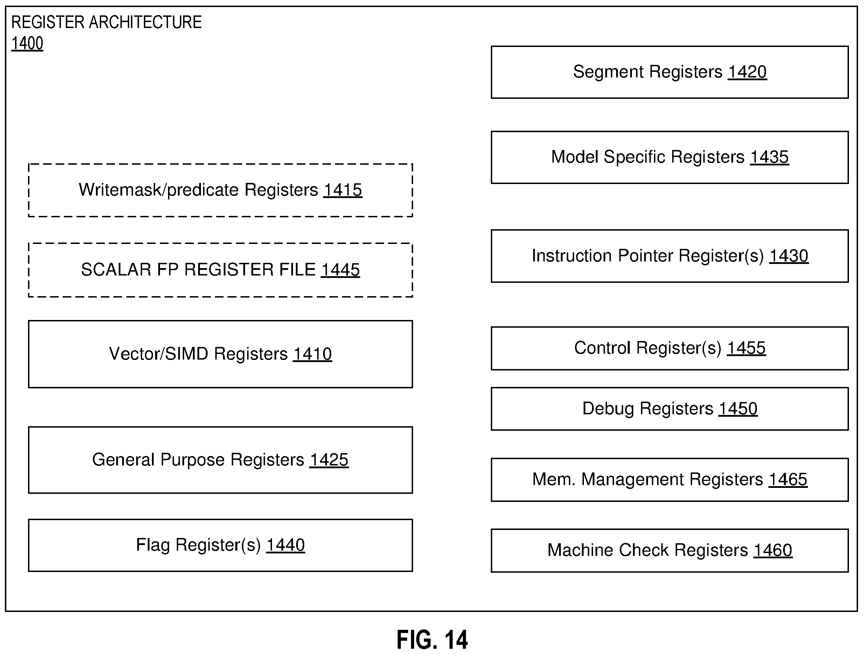

FIG. 14 is a block diagram of a register architecture 1400 according to some examples. As illustrated, the register architecture 1400 includes vector/SIMD registers 1410 that vary from 128-bit to 1,024 bits width. In some examples, the vector/SIMD registers 1410 are physically 512-bits and, depending upon the mapping, only some of the lower bits are used. For example, in some examples, the vector/SIMD registers 1410 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1400 includes writemask/predicate registers 1415. For example, in some examples, there are 8 writemask/predicate registers (sometimes called k0 through k7) that are each 16-bit, 32-bit, 64-bit, or 128-bit in size. Writemask/predicate registers 1415 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1415 corresponds to a data element position of the destination. In other examples, the writemask/predicate registers 1415 are scalable and consists of a set number of enable bits for a given vector element (e.g., 8 enable bits per 64-bit vector element).

The register architecture 1400 includes a plurality of general-purpose registers 1425. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1400 includes scalar floating-point (FP) register file 1445 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1440 (e.g., EFLAGS, RFLAGS, etc.) store status and control information for arithmetic, compare, and system operations. For example, the one or more flag registers 1440 may store condition code information such as carry, parity, auxiliary carry, zero, sign, and overflow. In some examples, the one or more flag registers 1440 are called program status and control registers.

Segment registers 1420 contain segment points for use in accessing memory. In some examples, these registers are referenced by the names CS, DS, SS, ES, FS, and GS.

Model specific registers or machine specific registers (MSRs) 1435 control and report on processor performance. Most MSRs 1435 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1460 consist of control, status, and error reporting MSRs that are used to detect and report on hardware errors. Control register(s) 1455 (e.g., CR0-CR4) determine the operating mode of a processor (e.g., processor 1070, 1080, 1038, 1015, and/or 1100) and the characteristics of a currently executing task. In some examples, MSRs 1435 are a subset of control registers 1455.

One or more instruction pointer register(s) 1430 store an instruction pointer value. Debug registers 1450 control and allow for the monitoring of a processor or core's debugging operations.

Memory (mem) management registers 1465 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1400 may, for example, be used in register file / memory 508, or physical register file(s) circuitry 1258.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

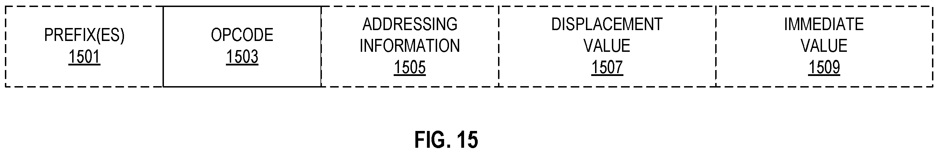

FIG. 15 illustrates examples of an instruction format. As illustrated, an instruction may include multiple components including, but not limited to, one or more fields for: one or more prefixes 1501, an opcode 1503, addressing information 1505 (e.g., register identifiers, memory addressing information, etc.), a displacement value 1507, and/or an immediate value 1509. Note that some instructions utilize some or all the fields of the format whereas others may only use the field for the opcode 1503. In some examples, the order illustrated is the order in which these fields are to be encoded, however, it should be appreciated that in other examples these fields may be encoded in a different order, combined, etc.

The prefix(es) field(s) 1501, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1503 is used to at least partially define the operation to be performed upon a decoding of the instruction. In some examples, a primary opcode encoded in the opcode field 1503 is one, two, or three bytes in length. In other examples, a primary opcode can be a different length. An additional 3-bit opcode field is sometimes encoded in another field.

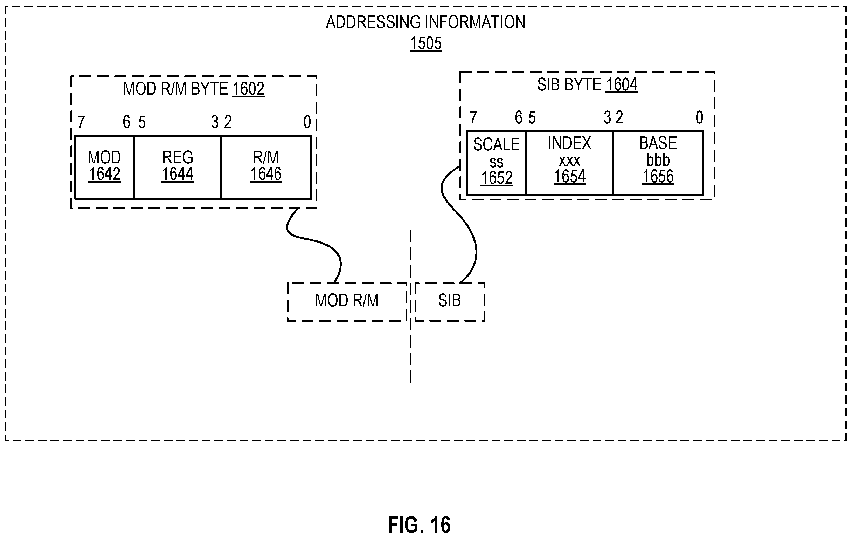

The addressing information field 1505 is used to address one or more operands of the instruction, such as a location in memory or one or more registers. FIG. 16 illustrates examples of the addressing information field 1505. In this illustration, an optional MOD R/M byte 1602 and an optional Scale, Index, Base (SIB) byte 1604 are shown. The MOD R/M byte 1602 and the SIB byte 1604 are used to encode up to two operands of an instruction, each of which is a direct register or effective memory address. Note that both of these fields are optional in that not all instructions include one or more of these fields. The MOD R/M byte 1602 includes a MOD field 1642, a register (reg) field 1644, and R/M field 1646.

The content of the MOD field 1642 distinguishes between memory access and non-memory access modes. In some examples, when the MOD field 1642 has a binary value of 11 (11b), a register-direct addressing mode is utilized, and otherwise a register-indirect addressing mode is used.

The register field 1644 may encode either the destination register operand or a source register operand or may encode an opcode extension and not be used to encode any instruction operand. The content of register field 1644, directly or through address generation, specifies the locations of a source or destination operand (either in a register or in memory). In some examples, the register field 1644 is supplemented with an additional bit from a prefix (e.g., prefix 1501) to allow for greater addressing.

The R/M field 1646 may be used to encode an instruction operand that references a memory address or may be used to encode either the destination register operand or a source register operand. Note the R/M field 1646 may be combined with the MOD field 1642 to dictate an addressing mode in some examples.

The SIB byte 1604 includes a scale field 1652, an index field 1654, and a base field 1656 to be used in the generation of an address. The scale field 1652 indicates a scaling factor. The index field 1654 specifies an index register to use. In some examples, the index field 1654 is supplemented with an additional bit from a prefix (e.g., prefix 1501) to allow for greater addressing. The base field 1656 specifies a base register to use. In some examples, the base field 1656 is supplemented with an additional bit from a prefix (e.g., prefix 1501) to allow for greater addressing. In practice, the content of the scale field 1652 allows for the scaling of the content of the index field 1654 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1507 provides this value. Additionally, in some examples, a displacement factor usage is encoded in the MOD field of the addressing information field 1505 that indicates a compressed displacement scheme for which a displacement value is calculated and stored in the displacement field 1507.

In some examples, the immediate value field 1509 specifies an immediate value for the instruction. An immediate value may be encoded as a 1-byte value, a 2-byte value, a 4-byte value, etc.

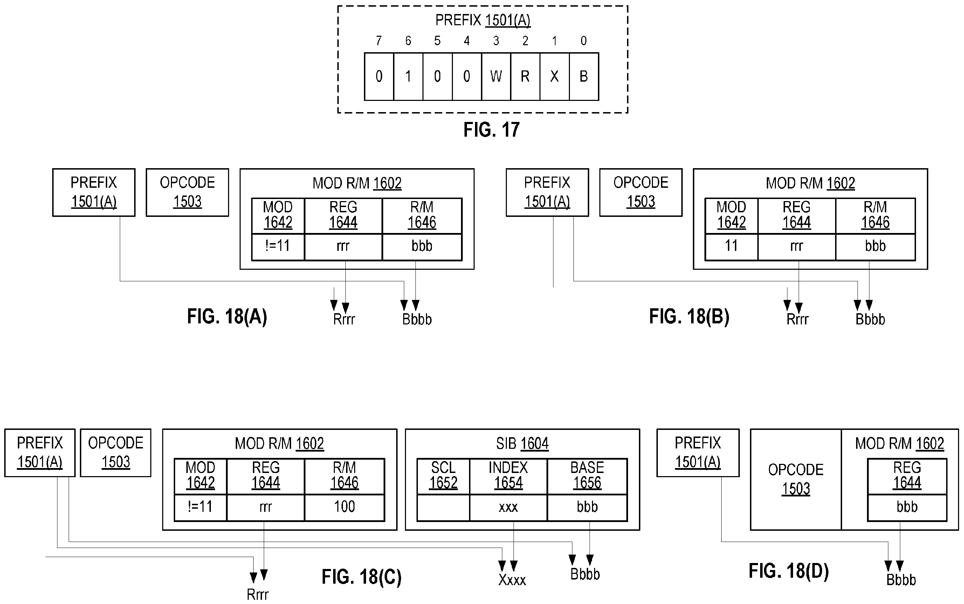

FIG. 17 illustrates examples of a first prefix 1501(A). In some examples, the first prefix 1501(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1501(A) may specify up to three registers using 3-bit fields depending on the format: 1) using the reg field 1644 and the R/M field 1646 of the MOD R/M byte 1602; 2) using the MOD R/M byte 1602 with the SIB byte 1604 including using the reg field 1644 and the base field 1656 and index field 1654; or 3) using the register field of an opcode.

In the first prefix 1501(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1644 and MOD R/M R/M field 1646 alone can each only address 8 registers.

In the first prefix 1501(A), bit position 2 (R) may be an extension of the MOD R/M reg field 1644 and may be used to modify the MOD R/M reg field 1644 when that field encodes a general-purpose register, a 64-bit packed data register (e.g., a SSE register), or a control or debug register. R is ignored when MOD R/M byte 1602 specifies other registers or defines an extended opcode.

### Bit position 1 (X) may modify the SIB byte index field 1654.

Bit position 0 (B) may modify the base in the MOD R/M R/M field 1646 or the SIB byte base field 1656; or it may modify the opcode register field used for accessing general purpose registers (e.g., general purpose registers 1425).

FIGS. 18(A)-(D) illustrate examples of how the R, X, and B fields of the first prefix 1501(A) are used. FIG. 18(A) illustrates R and B from the first prefix 1501(A) being used to extend the reg field 1644 and R/M field 1646 of the MOD R/M byte 1602 when the SIB byte 16 04 is not used for memory addressing. FIG. 18(B) illustrates R and B from the first prefix 1501(A) being used to extend the reg field 1644 and R/M field 1646 of the MOD R/M byte 1602 when the SIB byte 16 04 is not used (register-register addressing). FIG. 18(C) illustrates R, X, and B from the first prefix 1501(A) being used to extend the reg field 1644 of the MOD R/M byte 1602 and the index field 1654 and base field 1656 when the SIB byte 1604 being used for memory addressing. FIG. 18(D) illustrates B from the first prefix 1501(A) being used to extend the reg field 1644 of the MOD R/M byte 1602 when a register is encoded in the opcode 1503.

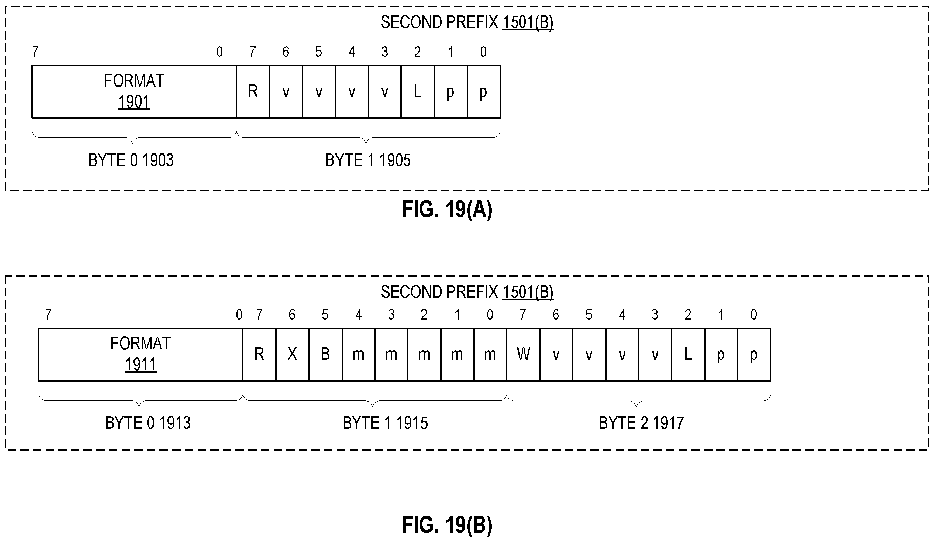

FIGS. 19(A)-(B) illustrate examples of a second prefix 1501(B). In some examples, the second prefix 1501(B) is an example of a VEX prefix. The second prefix 1501(B) encoding allows instructions to have more than two operands, and allows SIMD vector registers (e.g., vector/SIMD registers 1410) to be longer than 64-bits (e.g., 128-bit and 256-bit). The use of the second prefix 1501(B) provides for three-operand (or more) syntax. For example, previous two-operand instructions performed operations such as A = A + B, which overwrites a source operand. The use of the second prefix 1501(B) enables operands to perform nondestructive operations such as A = B + C.

In some examples, the second prefix 1501(B) comes in two forms - a two-byte form and a three-byte form. The two-byte second prefix 1501(B) is used mainly for 128-bit, scalar, and some 256-bit instructions; while the three-byte second prefix 1501(B) provides a compact replacement of the first prefix 1501(A) and 3-byte opcode instructions.

FIG. 19(A) illustrates examples of a two-byte form of the second prefix 1501(B). In one example, a format field 1901 (byte 0 1903) contains the value C5H. In one example, byte 11905 includes an "R" value in bit[7]. This value is the complement of the "R" value of the first prefix 1501(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that support four operands, vvvv, the MOD R/M R/M field 1646 and the MOD R/M reg field 1644 encode three of the four operands. Bits[7:4] of the immediate value field 1509 are then used to encode the third source register operand.

FIG. 19(B) illustrates examples of a three-byte form of the second prefix 1501(B). In one example, a format field 1911 (byte 0 1913) contains the value C4H. Byte 11915 includes in bits[7:5] "R," "X," and "B" which are the complements of the same values of the first prefix 1501(A). Bits[4:0] of byte 11915 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 1917 is used similar to W of the first prefix 1501(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1646 to encode the instruction operand that references a memory address or encode either the destination register operand or a source register operand.

Instructions that use this prefix may use the MOD R/M reg field 1644 to encode either the destination register operand or a source register operand, or to be treated as an opcode extension and not used to encode any instruction operand.

For instruction syntax that support four operands, vvvv, the MOD R/M R/M field 1646, and the MOD R/M reg field 1644 encode three of the four operands. Bits[7:4] of the immediate value field 1509 are then used to encode the third source register operand.

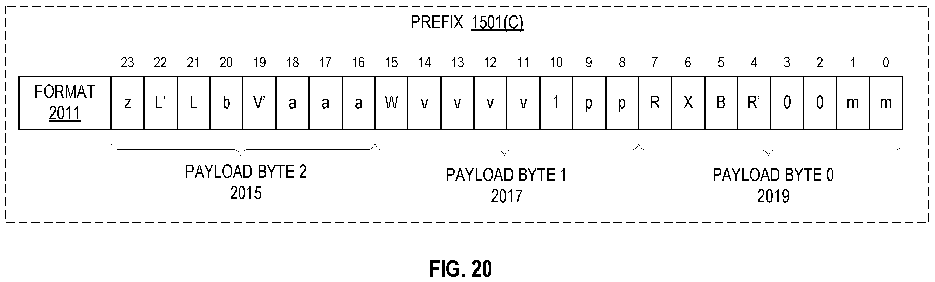

FIG. 20 illustrates examples of a third prefix 1501(C). In some examples, the third prefix 1501(C) is an example of an EVEX prefix. The third prefix 1501(C) is a four-byte prefix.

The third prefix 1501(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 14) or predication utilize this prefix. Opmask register allow for conditional processing or selection control. Opmask instructions, whose source/destination operands are opmask registers and treat the content of an opmask register as a single value, are encoded using the second prefix 1501(B).

The third prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1501(C) is a format field 2011 that has a value, in one example, of 62H. Subsequent bytes are referred to as payload bytes 2015-2019 and collectively form a 24-bit value of P[23:0] providing specific capability in the form of one or more fields (detailed herein).

In some examples, P[1:0] of payload byte 2019 are identical to the low two mm bits. P[3:2] are reserved in some examples. Bit P[4] (R') allows access to the high 16 vector register set when combined with P[7] and the MOD R/M reg field 1644. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1644 and MOD R/M R/M field 1646. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1501(A) and second prefix 1511(B) and may serve as an opcode extension bit or operand size promotion.

P[18:16] specify the index of a register in the opmask (writemask) registers (e.g., writemask/predicate registers 1415). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1501(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

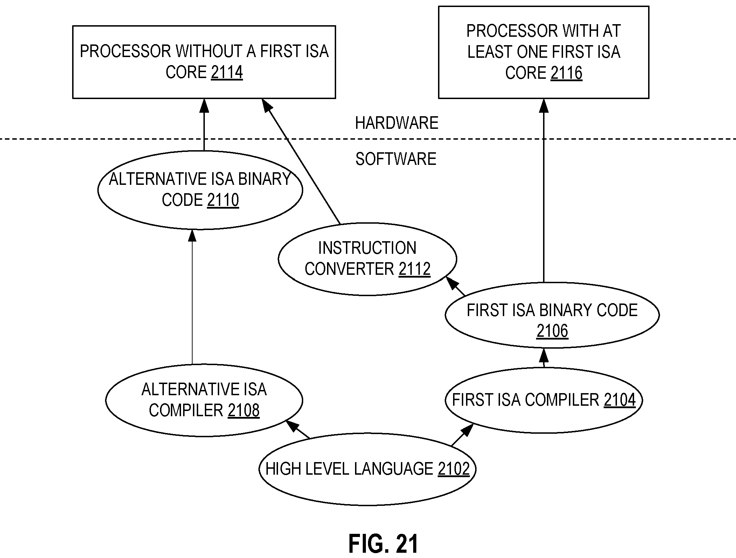

FIG. 21 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 21 shows a program in a high-level language 2102 may be compiled using a first ISA compiler 2104 to generate first ISA binary code 2106 that may be natively executed by a processor with at least one first ISA core 2116. The processor with at least one first ISA core 2116 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2104 represents a compiler that is operable to generate first ISA binary code 2106 (e.g., object code) that can, with or without additional linkage processing, be executed on the processor with at least one first ISA core 2116. Similarly, FIG. 21 shows the program in the high-level language 2102 may be compiled using an alternative ISA compiler 2108 to generate alternative ISA binary code 2110 that may be natively executed by a processor without a first ISA core 2114. The instruction converter 2112 is used to convert the first ISA binary code 2106 into code that may be natively executed by the processor without a first ISA core 2114. This converted code is not necessarily to be the same as the alternative ISA binary code 2110; however, the converted code will accomplish the general operation and be made up of instructions from the alternative ISA. Thus, the instruction converter 2112 represents software, firmware, hardware, or a combination thereof that, through emulation, simulation or any other process, allows a processor or other electronic device that does not have a first ISA processor or core to execute the first ISA binary code 2106.

Example embodiments include, but are not limited to:
1. An apparatus comprising:
   decoder circuitry to decode a single instruction, the single instruction to include one or more fields to identify a source operand, one or more fields to identify a destination operand, and one or more fields for an opcode, the opcode to indicate that execution circuitry is to convert packed FP8 data from the identified source to packed half-precision floating-point data or single-precision floating point data and store the packed half-precision floating-point data or single-precision floating point data into corresponding data element positions of the identified destination operand; and
   execution circuitry to execute the decoded instruction according to the opcode to convert FP8 data from the identified source to packed half-precision floating-point data or single-precision floating point data and store the packed half-precision floating-point data or single-precision floating point data into corresponding data element positions of the identified destination operand.
2. The apparatus of example 1, wherein the field for the identifier of the first source operand is to identify a vector register.
3. The apparatus of example 1, wherein the field for the identifier of the first source operand is to identify a memory location.
4. The apparatus of example 1, wherein elements of the first plurality of source matrix operands are in a 8-bit floating-point format having 1 bit for a sign, 5 bits for an exponent, and two bits for a fraction.
5. The apparatus of example 1, wherein elements of the first plurality of source matrix operands are in a 8-bit floating-point format having 1 bit for a sign, 4 bits for an exponent, and three bits for a fraction.
6. The apparatus of example 1, wherein the execution circuitry is to use a variable bias to convert to FP8.
7. The apparatus of example 1, wherein the single instruction is further to include one or more fields to identify a writemask operand, wherein one or more bits of the writemask operand are to indicate to execution circuitry which of the converted data values are to be written in the destination operand.
8. A method comprising:
   decoding a single instruction, the single instruction to include one or more fields to identify a source operand, one or more fields to identify a destination operand, and one or more fields for an opcode, the opcode to indicate that execution circuitry is to convert packed FP8 data from the identified source to packed half-precision floating-point data or single-precision floating point data and store the packed FP8 data into corresponding data element positions of the identified destination operand; and
   executing the decoded instruction according to the opcode to convert packed half-precision floating-point data or single-precision floating point data from the identified source to packed FP8 data and store the packed half-precision floating-point data or single-precision floating point data into corresponding data element positions of the identified destination operand.
9. The method of example 8, wherein the field for the identifier of the first source operand is to identify a vector register.
10. The method of example 8, wherein the field for the identifier of the first source operand is to identify a memory location.
11. The method of example 8, wherein elements of the first plurality of source matrix operands are in a 8-bit floating-point format having 1 bit for a sign, 5 bits for an exponent, and two bits for a fraction.
12. The method of example 8, wherein elements of the first plurality of source matrix operands are in a 8-bit floating-point format having 1 bit for a sign, 4 bits for an exponent, and three bits for a fraction.
13. The method of example 8, wherein the executing is to use a variable bias to convert to FP8.
14. The method of example 8, wherein the single instruction is further to include one or more fields to identify a writemask operand, wherein one or more bits of the writemask operand are to indicate to execution circuitry which of the converted FP8 data values are to be written in the destination operand.
15. The method of example 8, further comprising translating the single instruction into one or more instructions of a different instruction set architecture prior to decoding, wherein executing of the one or more instructions of the different instruction set architecture is to be functionally equivalent as the executing according to the opcode of the single instruction.
16. A non-transitory machine-readable medium storing an instance of a single instruction that includes one or more fields to identify a source operand, one or more fields to identify a destination operand, and one or more fields for an opcode, the opcode to indicate that execution circuitry is to convert FP8 data from the identified source to packed half-precision floating-point data or single-precision floating point data and store the packed half-precision floating-point data or single-precision floating point data into corresponding data element positions of the identified destination operand, wherein the instance of the single instruction is to be handled by a processor by performing a method, the method comprising:
   decoding the single instruction; and
   executing the decoded instruction according to the opcode to convert packed FP8 data from the identified source to packed half-precision floating-point data or single-precision floating point data and store the packed half-precision floating-point data or single-precision floating point data into corresponding data element positions of the identified destination operand.
17. The non-transitory machine-readable medium of example 16, wherein elements of the first plurality of source matrix operands are in a 8-bit floating-point format having 1 bit for a sign, 5 bits for an exponent, and two bits for a fraction.
18. The non-transitory machine-readable medium of example 16, wherein elements of the first plurality of source matrix operands are in a 8-bit floating-point format having 1 bit for a sign, 4 bits for an exponent, and three bits for a fraction.
19. The non-transitory machine-readable medium of example 16, wherein the executing is to use a variable bias to convert to FP8.
20. The non-transitory machine-readable medium of example 16, wherein the field for the identifier of the first source operand is to identify a vector register.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode a single instruction, the single instruction to include one or more fields to identify a source operand, one or more fields to identify a destination operand, and one or more fields for an opcode, the opcode to indicate that execution circuitry is to convert packed FP8 data from the identified source to packed half-precision floating-point data or single-precision floating point data and store the packed half-precision floating-point data or single-precision floating point data into corresponding data element positions of the identified destination operand; and
execution circuitry to execute the decoded instruction according to the opcode to convert FP8 data from the identified source to packed half-precision floating-point data or single-precision floating point data and store the packed half-precision floating-point data or single-precision floating point data into corresponding data element positions of the identified destination operand.

2. The apparatus of claim 1, wherein the field for the identifier of the first source operand is to identify a vector register.

3. The apparatus of claim 1, wherein the field for the identifier of the first source operand is to identify a memory location.

4. The apparatus of any of claims 1-3, wherein elements of the first plurality of source matrix operands are in a 8-bit floating-point format having 1 bit for a sign, 5 bits for an exponent, and two bits for a fraction.

5. The apparatus of any of claims 1-3, wherein elements of the first plurality of source matrix operands are in a 8-bit floating-point format having 1 bit for a sign, 4 bits for an exponent, and three bits for a fraction.

6. The apparatus of any of claims 1-5, wherein the execution circuitry is to use a variable bias to convert to FP8.

7. The apparatus of any of claims 1-6, wherein the single instruction is further to include one or more fields to identify a writemask operand, wherein one or more bits of the writemask operand are to indicate to execution circuitry which of the converted data values are to be written in the destination operand.

8. A method comprising:
decoding a single instruction, the single instruction to include one or more fields to identify a source operand, one or more fields to identify a destination operand, and one or more fields for an opcode, the opcode to indicate that execution circuitry is to convert packed FP8 data from the identified source to packed half-precision floating-point data or single-precision floating point data and store the packed FP8 data into corresponding data element positions of the identified destination operand; and
executing the decoded instruction according to the opcode to convert packed half-precision floating-point data or single-precision floating point data from the identified source to packed FP8 data and store the packed half-precision floating-point data or single-precision floating point data into corresponding data element positions of the identified destination operand.

9. The method of claim 8, wherein the field for the identifier of the first source operand is to identify a vector register.

10. The method of claim 8, wherein the field for the identifier of the first source operand is to identify a memory location.

11. The method of any of claims 8-10, wherein elements of the first plurality of source matrix operands are in a 8-bit floating-point format having 1 bit for a sign, 5 bits for an exponent, and two bits for a fraction.

12. The method of any of claims 8-10, wherein elements of the first plurality of source matrix operands are in a 8-bit floating-point format having 1 bit for a sign, 4 bits for an exponent, and three bits for a fraction.

13. The method of any of claims 8-12, wherein the executing is to use a variable bias to convert to FP8.

14. The method of any of claims 8-13, wherein the single instruction is further to include one or more fields to identify a writemask operand, wherein one or more bits of the writemask operand are to indicate to execution circuitry which of the converted FP8 data values are to be written in the destination operand.

15. Machine-readable storage including machine-readable instructions, when executed, to implement a method or realize an apparatus as claimed in any preceding claim.
